# FASCICULE DE BREVET EUROPEEN

(11) **EP 1 796 248 B1**
(45) Date de publication et mention de la délivrance du brevet: **15.06.2011**
(21) Numéro de dépôt: 06301168.8
(22) Date de dépôt: 22.11.2006
(51) Int. Cl.: H02K 15/03, H02K 1/27

(54) **Procédé de fabrication d'un rotor et rotor de machine tournante électrique**
Verfahren zur Herstellung eines Rotors und Rotor für eine rotierende elektrische Maschine
Method of manufacturing a rotor and rotor for a rotary electrical machine

(30) Priorité: 08.12.2005 FR 0553777
(43) Date de publication de la demande: 13.06.2007
(73) Titulaire: MOTEURS LEROY-SOMER, 16000 Angoulême (FR)
(72) Inventeur: Coupart, Eric, 16000, ANGOULEME (FR); Peltier, François, 16600, TOUVRE (FR)
(74) Mandataire: Tanty, François

(56) Documents cités:
- EP-A- 0 866 540
- US-A- 4 117 360
- US-A- 4 302 693
- US-A- 4 486 678
- US-A- 4 729 160
- US-A- 6 047 461

## Description

La présente invention concerne les machines tournantes électriques à aimants permanents, et plus particulièrement celles dont le rotor est destiné à tourner à une vitesse relativement élevée, par exemple de 10 000 tr min⁻¹ ou plus.

Lorsque le rotor tourne à une telle vitesse, les aimants ne doivent pas se déplacer car sinon la répartition des masses sur le rotor est modifiée, ce qui entraîne un déséquilibrage de celui-ci pouvant aller jusqu'à un contact avec le stator et la destruction de la machine.

Il existe des rotors comportant des aimants collés en surface. De tels rotors sont inadaptés à tourner à des vitesses de rotation élevées en raison des contraintes qui s'exercent sur les aimants et du risque de décollement de ceux-ci.

Il est connu d'utiliser une enveloppe extérieure pré-contrainte (encore appelée frette) pour maintenir les aimants.

Le brevet US 6 452 301 divulgue ainsi un rotor comportant une enveloppe extérieure formée d'un matériau composite comportant un enroulement de fibres de polyester, d'aramide, de verre ou de carbone.

Le brevet US 6 940 196 divulgue un rotor dans lequel la pré-contrainte est obtenue par injection d'une résine sous pression dans le rotor.

Le brevet US 6 047 461 décrit une structure de rotor qui n'est pas radialement expansible de manière irréversible, étant formée d'un support sur lequel sont disposés des aimants annulaires recouverts d'une frette.

Le brevet US 4 302 693 décrit un rotor ayant des aimants et des pièces en forme de coin.

Ce brevet n'enseigne pas de précontraindre une enveloppe du rotor en provoquant une expansion radiale d'une structure interne. L'enveloppe est en effet mise en place par dilatation à chaud après que l'assemblage constitué des aimants et des pièces en forme de coin ait été centrifugé.

La demande US 2003/0182787 divulgue un procédé de fabrication d'un rotor dans lequel une enveloppe de maintien des aimants est mise sous contrainte au moyen d'un fluide injecté sous pression qui se solidifie et reste solide aux températures de fonctionnement de la machine.

Le brevet US 4 638 200 divulgue un rotor dans lequel l'enveloppe extérieure est formée d'un empilage d'anneaux ou d'une bande enroulée sur elle-même.

Le brevet US 6 891 299 incorporé ici par référence divulgue un rotor comportant un moyeu ayant des formes d'assemblage en queue d'aronde, permettant la fixation de pièces polaires. Des aimants en forme de coin sont disposés entre les pièces polaires.

Un tel rotor peut supporter des vitesses de rotation relativement élevées, par exemple de 4 000 trs/mn à 8 000 trs/mn selon sa dimension.

Toutefois, pour des vitesses encore plus élevées, les contraintes mécaniques liées à la force centrifuge sont susceptibles de devenir excessives, aussi bien au niveau du moyeu que des pièces polaires.

Il existe un besoin pour bénéficier d'un rotor capable de tourner à une vitesse élevée, pouvant atteindre par exemple plus de 150 ms⁻¹ en périphérie, afin de réaliser un moteur ou générateur ayant un encombrement relativement faible et une densité massique d'énergie élevée.

Il existe encore un besoin pour permettre de réaliser d'une façon relativement simple et fiable un rotor capable de supporter une vitesse de rotation élevée.

L'invention répond à ce besoin grâce à un procédé de fabrication d'un rotor, comportant les étapes suivantes :
a) réaliser une structure interne de rotor radialement expansible, notamment par centrifugation, de manière irréversible,
b) disposer une enveloppe autour de la structure ainsi réalisée,
c) provoquer une expansion radiale de la structure interne, notamment en entraînant la structure interne et l'enveloppe à une vitesse de rotation suffisante, pour précontraindre l'enveloppe.

La structure interne peut comporter un moyeu et un premier ensemble de pièces disposées autour du moyeu, notamment rapportées sur celui-ci.

La structure interne peut également comporter un deuxième ensemble de pièces mobiles de manière unidirectionnelle relativement à celles du premier ensemble, lors de l'expansion radiale de la structure interne.

Les pièces des premier et deuxième ensembles peuvent alterner dans la direction circonférentielle.

Les pièces du deuxième ensemble peuvent présenter chacune une forme de coin. Ces pièces peuvent être formées par exemple par tout ou partie des aimants permanents du rotor, les pièces du premier ensemble étant par exemple des pièces polaires permettant de concentrer le flux des aimants.

Les pièces du deuxième ensemble peuvent encore être différentes des aimants permanents du rotor, ceux-ci étant par exemple disposés entre les pièces du premier ensemble et l'enveloppe.

Dans un exemple de mise en oeuvre de l'invention, lors de la centrifugation, les pièces du premier ensemble tendent à se dilater radialement vers l'extérieur et celles du deuxième ensemble, grâce à leur forme de coin, peuvent se déplacer radialement et s'insérer davantage entre les pièces du premier ensemble, afin de maintenir la structure interne dilatée lorsque la rotation cesse.

Un tel procédé permet d'obtenir un rotor capable de supporter une vitesse de rotation élevée.

Entre les étapes b) et c), un pré-positionnement des pièces du deuxième ensemble peut être effectué.

Une pré-centrifugation du rotor est par exemple effectuée de façon à améliorer le positionnement relatif des pièces des premier et deuxième ensembles, mais le pré-positionnement peut s'effectuer autrement que par pré-centrifugation.

La pré-centrifugation peut s'effectuer par exemple à une vitesse de rotation comprise entre 0,5 et 0,8 fois la vitesse nominale de rotation du rotor.

La centrifugation à l'étape c) peut s'effectuer par exemple dans la plage de vitesses allant de 1,2 à 2 fois la vitesse de rotation maximale de fonctionnement.

L'enveloppe comporte par exemple un matériau composite, notamment des fibres de carbone, de polyester, de verre, d'aramide ou autres.

Après l'étape de centrifugation, le rotor peut être éventuellement imprégné d'une résine.

L'invention a encore pour objet, selon un autre de ses aspects, un rotor obtenu par le procédé précité et une machine électrique, moteur ou générateur, comportant un stator et un tel rotor.

L'invention a encore pour objet, selon un autre de ses aspects, un rotor de machine électrique comportant :
- une structure interne comportant:
   - un moyeu,
   - un premier ensemble de pièces autour du moyeu, notamment des pièces rapportées sur le moyeu,
   - un deuxième ensemble de pièces présentant chacune une forme de coin et intercalées entre les pièces du premier ensemble, de telle sorte que la structure interne soit capable d'une expansion radiale irréversible, notamment par centrifugation,
   - une enveloppe entourant la structure interne et subissant des forces de pré-contrainte du fait de l'expansion de la structure interne du rotor.

Dans un exemple de mise en oeuvre de l'invention, les pièces du premier ensemble sont par exemple des pièces fixées par complémentarités de formes sur le moyeu.

Ces pièces sont par exemple des pièces polaires et celles du deuxième ensemble des aimants permanents.

Dans un autre exemple de mise en oeuvre de l'invention, les pièces du premier ensemble sont disposées sur le moyeu et celles du deuxième ensemble sont insérées entre celles du premier ensemble et présentent chacune une forme de coin.

Les pièces du premier ensemble sont fixées ou non par complémentarités de formes sur le moyeu.

La structure interne peut comporter des aimants permanents entre l'enveloppe et les pièces du premier ensemble.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente en coupe transversale un exemple de rotor réalisé conformément à l'invention,
- la figure 2 représente isolément, en perspective schématique et partielle, la structure interne du rotor en cours d'assemblage,
- la figure 3 est un schéma en blocs illustrant des étapes d'un procédé selon l'invention,
- les figures 4 et 5 sont des vues analogues à la figure 1, de variantes de mise en oeuvre de l'invention, et
- la figure 6 est une vue analogue à la figure 3, illustrant une variante de procédé.

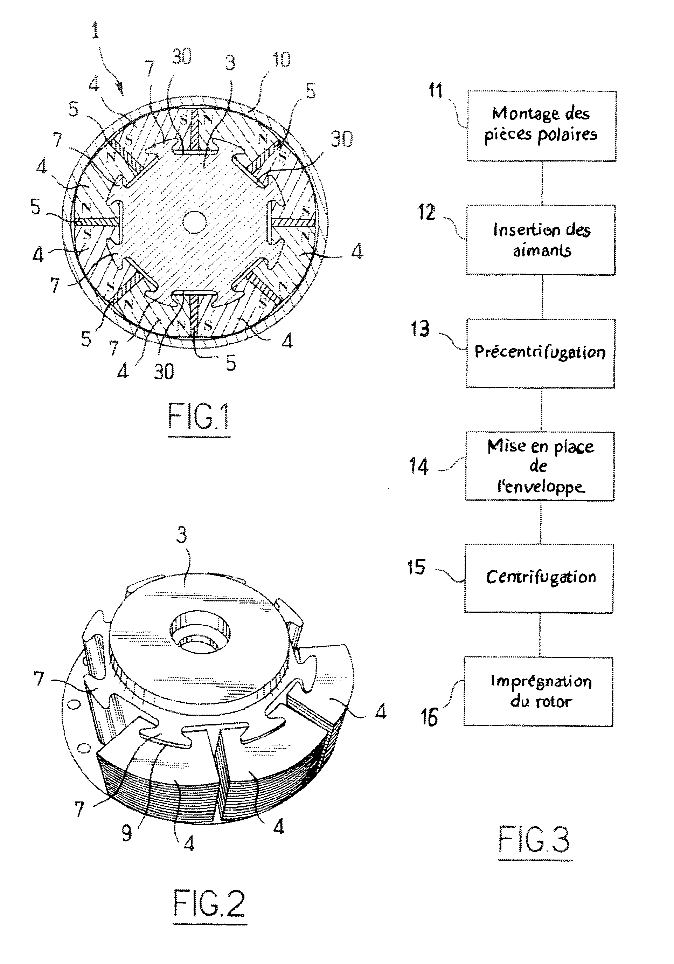

On a représenté à la figure 1 un rotor 1 d'une machine synchrone à aimants permanents, comportant un moyeu 3, une pluralité de pièces polaires 4 disposées autour du moyeu 3 et des aimants permanents 5 engagés entre les pièces polaires 4. Ces dernières concentrent le flux magnétique des aimants 5, lesquels ont une aimantation transverse et des pôles de même nature tournés vers chaque pièce polaire 4 commune.

Le moyeu 3 présente à sa périphérie, comme illustré à la figure 2, des reliefs d'assemblage 7, par exemple chacun en forme de queue d'aronde, et les pièces polaires 4 présentent des logements 9 de forme complémentaire.

Les pièces polaires 4 sont par exemple formées par un empilage de tôles magnétiques vernies, de façon à réduire les pertes par courants induits.

Le moyeu 3 est par exemple en un matériau amagnétique tel que de l'aluminium ou de l'inox amagnétique.

Des espaces 30 sont formés entre le moyeu 3 et les pièces polaires 4.

La structure interne du rotor est par exemple telle que décrite dans le brevet US 6 891 299, incorporé par référence.

Le rotor 1 comporte une enveloppe 10 qui entoure cette structure interne.

L'enveloppe 10 est dans l'exemple considéré réalisée dans un matériau composite comportant un ou plusieurs enroulements de fibres de carbone, ce qui permet de profiter du faible allongement sous charge des fibres de carbone. L'enveloppe 10 peut encore être réalisée autrement, par exemple avec d'autres fibres ou d'autres matériaux.

Le rotor de la figure 1 peut être fabriqué de la manière suivante, que l'on va décrire en se référant à la figure 3.

A l'étape 11, on commence l'assemblage de la structure interne en montant les pièces polaires 4 sur le moyeu 3 puis à l'étape 12, on procède à l'insertion entre les pièces polaires 4 des aimants 5 avec leurs faces polaires convergeant radialement vers l'extérieur.

Ensuite, à l'étape 13 on effectue une pré-centrifugation de la structure interne ainsi constituée, de façon à pré-positionner précisément les aimants 5 relativement aux pièces polaires 4.

La pré-centrifugation peut s'effectuer alors que la structure interne est engagée dans un outil comportant des reliefs de même hauteur, engagés entre les pièces polaires 4. Lors de la pré-centrifugation, les aimants 5 viennent radialement en butée contre ces reliefs et se trouvent par conséquent tous positionnés à la même distance de l'axe de rotation.

Lors de la pré-centrifugation, le rotor peut être entraîné à une vitesse de rotation inférieure à la vitesse nominale de rotation.

On peut procéder ensuite à l'étape 14 à la mise en place de l'enveloppe 10 sur la structure interne du rotor, par exemple en bobinant sur la structure interne des fils ou nappes de fils imprégnés d'une résine polymérisable ou en amenant l'enveloppe déjà fabriquée sur la structure interne, avec éventuellement un léger serrage.

On procède ensuite, à l'étape 15, à la centrifugation du rotor à une vitesse supérieure à la vitesse de rotation maximale de fonctionnement, par exemple 1,2 à 2 fois cette vitesse.

Sous l'effet des forces centrifuges, les pièces polaires 4 tendent à s'écarter et à exercer une contrainte radiale sur l'enveloppe 10. Les aimants 5 peuvent se déplacer entre les pièces polaires 4 et empêcher leur retour vers l'axe de rotation lorsque la vitesse de rotation diminue.

Une fois la centrifugation effectuée, la structure interne du rotor est dilatée et l'enveloppe 10 est pré-contrainte, ce qui rend l'assemblage stable pour la plage des vitesses de fonctionnement prévue pour la machine.

Ensuite, à l'étape 16, le rotor peut éventuellement être imprégné. Cette imprégnation peut se faire avec un matériau qui peut être choisi en fonction de la nature de l'enveloppe.

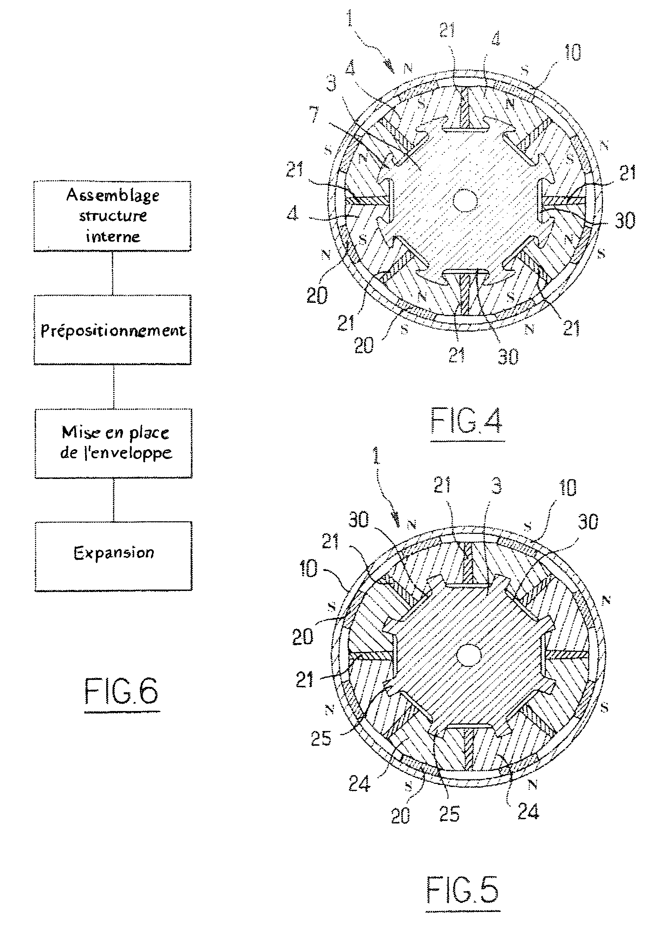

On a représenté à la figure 4 une variante de réalisation comportant des aimants 20 disposés à la périphérie de la structure interne du rotor, étant par exemple collés sur les faces des pièces 4 en regard de l'enveloppe 10.

Les aimants 5 de la réalisation de la figure 1 sont remplacés par des pièces 21 qui peuvent être magnétiques ou non, et qui sont intercalées entre les pièces 4, lesquelles ne servent plus à concentrer le flux magnétique des aimants 20.

Les pièces 21 présentent une forme en coin comme les aimants 5 et jouent la même fonction de blocage de la structure interne dans une configuration dilatée.

Dans la variante de la figure 4, le moyeu 3 peut être réalisé dans un matériau magnétique, le cas échéant, ce qui peut en diminuer le coût.

Dans la variante illustrée à la figure 5, les pièces 4 de la figure 4 sont remplacées par des pièces 24 qui ne sont plus retenues sur le moyeu 3 par complémentarités de formes mais par l'enveloppe 10.

Le moyeu 3 est par exemple réalisé avec des reliefs 25 tels que des nervures, qui assurent la transmission de couple et ne servent pas à retenir radialement les pièces 24 sur le moyeu 3.

L'absence de reliefs en forme de queue d'aronde peut faciliter la réalisation du moyeu 3 et des pièces 24.

Pour assembler la structure interne de la figure 5, un outil est par exemple utilisé pour maintenir les pièces 21 et 24 sur le moyeu 3 tant que l'enveloppe 10 n'est pas en place. Les aimants 20 ont par exemple été préalablement fixés sur les pièces 24, par exemple par collage.

Dans une variante non illustrée, le moyeu 3 de la figure 1 est remplacé par celui de la figure 5 et les pièces polaires 4 par les pièces 24.

Avant la mise en place de l'enveloppe 10, le pré-positionnement des aimants 5 ou pièces 21 peut s'effectuer par pré-centrifugation, comme expliqué précédemment.

En variante, ce pré-positionnement peut s'effectuer autrement, comme illustré à la figure 6, par exemple au moyen d'une poussée exercée sur les aimants 5 ou les pièces 21 par un outil adapté s'appliquant sur les aimants 5 ou les pièces 21 du côté du moyeu 3.

Dans une variante non illustrée, les pièces 24 sont réalisées de façon monolithique avec le moyeu, avec l'espace 30, par découpage de tôles et empilage de celles-ci, par exemple.

L'invention n'est pas limitée à un nombre de pôles particulier au rotor.

L'expression « comportant un » doit être comprise comme étant synonyme de « comportant au moins un », sauf si le contraire est spécifié.

## Revendications

1. Procédé de fabrication d'un rotor, comportant les étapes suivantes :
a) réaliser une structure interne de rotor radialement expansible de manière irréversible, notamment par centrifugation,
b) disposer une enveloppe (10) autour de la structure ainsi réalisée,
c) provoquer une expansion radiale de la structure interne, notamment en entraînant la structure interne et l'enveloppe à une vitesse de rotation suffisante, pour pré-contraindre l'enveloppe.

2. Procédé selon la revendication 1, dans lequel la structure interne comporte un moyeu (3) et un premier ensemble de pièces (4 ; 24) disposées autour du moyeu, notamment rapportées sur celui-ci.

3. Procédé selon la revendication précédente, dans lequel la structure interne comporte un deuxième ensemble de pièces (5 ; 21) mobiles de manière unidirectionnelle relativement à celles (4 ; 24) du premier ensemble lors de l'expansion radiale de la structure interne.

4. Procédé selon la revendication précédente, dans lequel les pièces des premier et deuxième ensembles alternent dans la direction circonférentielle.

5. Procédé selon la revendication 3 ou 4, dans lequel les pièces du deuxième ensemble présentent chacune une forme de coin.

6. Procédé selon la revendication 5, les pièces du deuxième ensemble étant formées par tout ou partie des aimants permanents (5) du rotor.

7. Procédé selon la revendication 5, les pièces (21) du deuxième ensemble n'étant pas formées par des aimants permanents.

8. Procédé selon la revendication 5, dans lequel les pièces du premier ensemble sont des pièces polaires (4) permettant de concentrer le flux des aimants.

9. Procédé selon l'une quelconque des revendications précédentes, dans lequel entre les étapes b) et c), une pré-centrifugation du rotor est effectuée.

10. Procédé selon la revendication précédente, dans lequel la pré-centrifugation s'effectue à une vitesse de rotation comprise entre 0,5 et 0,8 fois la vitesse nominale de rotation du rotor.

11. Procédé selon l'une quelconque des revendications précédentes, dans lequel la centrifugation à l'étape c) s'effectue dans la plage de vitesses allant de 1,2 à 2 fois la vitesse de rotation maximale de fonctionnement.

12. Procédé selon l'une quelconque des revendications précédentes, dans lequel l'enveloppe (10) comporte un matériau composite, notamment des fibres de carbone, de polyester, de verre, d'aramide ou autres.

13. Procédé selon l'une quelconque des revendications précédentes, dans lequel après l'étape c) de centrifugation, le rotor est imprégné d'une résine.

14. Procédé selon la revendication 3, les pièces des premier et deuxième ensembles étant pré-positionnées avant la mise en place de l'enveloppe (10).

15. Procédé selon la revendication 14, le pré-positionnement s'effectuant à l'aide d'un outil.

16. Rotor de machine électrique comportant :
- une structure interne comportant :
- un moyeu (3),
- un premier ensemble de pièces (4 ; 24) autour du moyeu, notamment rapportées sur celui-ci,
- un deuxième ensemble de pièces (5 ; 21) présentant chacune une forme de coin et intercalées entre les pièces (4 ; 24) du premier ensemble, de telle sorte que la structure interne soit capable d'une expansion radiale irréversible, notamment par centrifugation,
- une enveloppe (10) entourant la structure interne et subissant des forces de pré-contrainte du fait de l'expansion de la structure interne du rotor.

17. Rotor selon la revendication précédente, dans lequel les pièces du premier ensemble sont des pièces polaires (4) et celles du deuxième ensemble des aimants permanents (5).

18. Rotor selon la revendication 17, les pièces polaires (4) étant fixées par complémentarités de formes sur le moyeu.

19. Rotor selon la revendication 16, comportant des aimants (20) entre l'enveloppe (10) et les pièces (4 ; 24) du premier ensemble.

20. Rotor selon la revendication 19, le moyeu (3) étant réalisé dans un matériau magnétique.

21. Machine électrique tournante comportant :
- un stator,
- un rotor tel que défini dans l'une quelconque des revendications 16 à 20.

## Claims

1. Method of manufacturing a rotor, comprising the following stages:
a) making an internal rotor structure, which may be expanded radially in an irreversible way, particularly by centrifuging.
b) providing an envelope (10) around the structure made in this way,
c) causing radial expansion of the internal structure, particularly by entraining the internal structure and the envelope at a speed of rotation sufficient to prestress the envelope.

2. Method according to claim 1, in which the internal structure comprises a hub (3) and a first set of parts (4; 24) arranged around the hub, particularly joined on it.

3. Method according to the previous claim, in which the internal structure comprises a second set of parts (5; 21) which may move in a unidirectional way in relation to those (4; 24) of the first set during radial expansion of the internal structure.

4. Method according to the previous claim, in which the parts of the first and second sets alternate in the circumferential direction.

5. Method according to claim 3 or 4, in which the parts of the second set each have a corner shape.

6. Method according to claim 5, the parts of the second set being formed by all or part of the permanent magnets (5) of the rotor.

7. Method according to claim 5, the parts (21) of the second set not being formed by the permanent magnets.

8. Method according to claim 5, in which the parts of the first set are polar parts (4) allowing the flow of the magnets to be concentrated.

9. Method according to any one of the previous claims, in which precentrifuging of the rotor is carried out between stages b) and c).

10. Method according to the previous claim, in which the precentrifuging is carried out at a speed of rotation between 0.5 and 0.8 times the nominal speed of rotation of the rotor.

11. Method according to any one of the previous claims, in which the centrifuging in stage c) is carried out in the speed range from 1.2 to 2 times the maximum operating speed of rotation.

12. Method according any one of the previous claims, in which the envelope (10) comprises a composite material, particularly carbon, polyester, glass and nylon fibres or others.

13. Method according to any one of the previous claims, in which the rotor is impregnated with resin after the centrifuging stage c).

14. Method according to claim 3, the parts of the first and second sets being prepositioned before putting the envelope (10) in place.

15. Method according to claim 14, the propositioning being carried out using a tool.

16. Rotor for an electrical machine comprising:
- an internal structure comprising:
- a hub (3),
- a first set of parts (4; 24) around the hub, particularly joined on it,
- a second set of parts (5; 21) each having a corner shape and being inserted between the parts (4; 24) of the first set so that the internal structure is capable of irreversible radial expansion, particularly by centrifuging,
- an envelope (10) surrounding the internal structure and subject to prestress forceps due to the expansion of the internal structure of the rotor.

17. Rotor according to the previous claim, in which the parts of the first set are polar parts (4) and those of the second set are permanent magnets (5).

18. Rotor according to claim 17, the polar parts (4) being fixed by the complementary nature of shapes on the hub.

19. Rotor according to claim 16, comprising magnets (20) between the envelope (10) and the parts (4; 24) of the first set.

20. Rotor according to claim 19, the hub (3) being made of a magnetic material.

21. Rotary electrical machine comprising:
- a stator,
- a rotor such as defined in any one of claims 16 to 20.

## Patentansprüche

1. Verfahren zur Herstellung eines Rotors mit den folgenden Schritten:
a) Fertigen einer Rotorinnenstruktur, die auf irreversible Weise, insbesondere durch Zentrifugierten, radial expandierbar ist,
b) Anordnen einer Hülle (10) um die so gefertigte Struktur,
c) Bewirken einer radialen Expansion der Innenstruktur, insbesondere indem die Innenstruktur und die Hülle mit einer ausreichenden Drehgeschwindigkeit angetrieben werden, um die Hülle vorzuspannen.

2. Verfahren nach Anspruch 1, in dem die Innenstruktur eine Nabe (3) und eine erste Gruppe von Elementen (4; 24) aufweist, die um die Nabe angeordnet, insbesondere auf ihr aufgesteckt, sind.

3. Verfahren nach dem vorstehenden Anspruch, in dem die Innenstruktur eine zweite Gruppe von Elementen (5; 21) aufweist, die während der radialen Expansion der Innenstruktur auf unidirektionale Weise relativ zu denen der ersten Gruppe (4; 24) beweglich sind.

4. Verfahren nach dem vorstehenden Anspruch, in dem die Elemente der ersten und der zweiten Gruppe sich in der Umfangsrichtung abwechseln.

5. Verfahren nach Anspruch 3 oder 4, in dem die Elemente der zweiten Gruppe jeweils keilförmig sind.

6. Verfahren nach Anspruch 5, wobei die Elemente der zweiten Gruppe ganz oder teilweise durch Permanentmagneten (5) des Rotors gebildet sind.

7. Verfahren nach Anspruch 5, wobei die Elemente (21) der zweiten Gruppe nicht durch Permanentmagneten gebildet sind.

8. Verfahren nach Anspruch 5, in dem die Elemente der ersten Gruppe Polarelemente (4) sind, die eine Konzentration des Magnetflusses erlauben.

9. Verfahren nach einem der vorstehenden Ansprüche, wobei zwischen den Schritten b) und c) ein Vorzentrifugieren des Rotors durchgeführt wird.

10. Verfahren nach dem vorstehenden Anspruch, in dem das Vorzentrifugieren mit einer Drehgeschwindigkeit durchgeführt wird, die zwischen dem 0,5- und 0,8-fachen der Nenndrehgeschwindigkeit des Rotors liegt.

11. Verfahren nach einem der vorstehenden Ansprüche, in dem das Zentrifugieren im Schritt c) in einem Geschwindigkeitsbereich vom 1,2- bis 2-fachen der Maximalbetriebsdrehgeschwindigkeit liegt.

12. Verfahren nach einem der vorstehenden Ansprüche, in dem die Hülle (10) ein Verbundmaterial aufweist, insbesondere Fasern aus Kohlenstoff, Polyester, Glas, Aramid oder dergleichen.

13. Verfahren nach einem der vorstehenden Ansprüche, in dem nach dem Zentrifugierschritt c) der Rotor mit einem Harz imprägniert wird.

14. Verfahren nach Anspruch 3, wobei die Elemente der ersten und der zweiten Gruppe vor dem Anordnen der Hülle (10) vorpositioniert werden.

15. Verfahren nach Anspruch 14, wobei das Vorpositionieren mittels eines Werkzeugs erfolgt.

16. Rotor einer Elektromaschine mit:
einer Innenstruktur, die umfasst:
eine Nabe (3),
- eine erste Gruppe von Elementen (4; 24) um die Nabe herum, insbesondere auf diese aufgesteckt,
eine zweite Gruppe von Elementen (5;. 21), die jeweils keilförmig sind und zwischen die Elemente (4; 24) der ersten Gruppe so geschoben sind, dass die Innenstruktur dazu ausgelegt ist, eine irreversible Radialexpansion auszuführen, insbesondere durch Zentrifugieren,
eine Hülle (10), die die Innenstruktur umgibt und Vorspannungskräften aus der Expansion der Rotorinnenstruktur unterworfen ist.

17. Rotor nach dem vorstehenden Anspruch, in dem die Elemente der ersten Gruppe Polarelemente (4) und diejenigen der zweiten Gruppe Permanentmagneten (5) sind.

18. Rotor nach Anspruch 17, wobei die Polarelemente (4) durch Formkomplementärstücke an der Nabe befestigt sind.

19. Rotor nach Anspruch 16, mit Magneten (20) zwischen der Hülle (10) und den Elementen (4; 24) der ersten Gruppe.

20. Rotor nach Anspruch 19, wobei die Nabe (3) aus einem magnetischen Material gefertigt ist.

21. Elektrodrehmaschine mit:
- einem Stator,
- einem Rotor gemäß einem der Ansprüche 16 bis 20.
